# EUROPEAN PATENT APPLICATION

(11) **EP 4 817 773 A1**
(43) Date of publication of application: **07.10.2026**
(21) Application number: 26170735.0
(22) Date of filing: 03.04.2026
(51) Int. Cl.: B23D 57/00, B28D 1/08

(54) **MULTI-WIRE CUTTING MACHINE FOR STONE BLOCKS WITH A WIRE GUIDE DEVICE**

(30) Priority: 04.04.2025 IT 202500007386
(71) Applicant: Pedrini SpA ad Unico Socio, 24060 Carobbio degli Angeli (BG) (IT)
(72) Inventor: PEDRINI, Giambattista, 20460 Carobbio degli Angeli (BG) (IT)
(74) Representative: Metroconsult Srl

(57) **Abstract**

A multi-wire cutting machine for cutting blocks of stone material with an improved wire guide device, comprising a support and guide structure for cutting a block of stone with a multitude of diamond wires; the diamond wires are guided upstream and downstream of the stone block with guide rollers and each of the guide rollers is equipped with a respective mechanism for approaching or moving away from the wall of the stone block being worked. The multi-wire cutting machine of the invention also comprises a tensioning device for the diamond wires comprising first tensioning means and second tensioning means, said first and second tensioning means being made to oscillate on respective oscillation pins connected to the support and guide structure. Each mechanism for approaching or moving away the guide rollers comprises an oscillating frame placed in oscillation on a pair of oscillation hinges with an axis oriented like the axis of rotation of the guide roller and connected to the support and guide structure of the multitude of diamond wires. The multi-wire cutting machine of the invention also comprises an adjusting device for the oscillating frame that allows modifying the conformation of each mechanism for approaching or moving away to determine the position of the axis of the respective guide roller in approaching or moving away from the stone block being cut.

## Description

### Field of Application

The invention relates to a multi-wire cutting machine for cutting blocks of stone material with an improved wire guide device, namely a frame that rotatably supports a multitude of closed-loop diamond wires that are placed side-by-side to cut in a single operation a block of natural or artificial stone that needs to be divided into thin slabs. Furthermore, the new frame provides for new adjustable devices to improve the support of said wires in their guidance during the cutting of the natural or artificial stone block.

### Prior Art

The state of the art comprises various embodiments of multi-wire cutting machines in which at least one guide roller is present on the side of the stone block undergoing cutting where the diamond wires penetrate the cuts in the block. Furthermore, it is known to make multi-wire cutting machines in which guide rollers are present on both sides of the stone block being cut so as to precisely guide the diamond wires in the cutting of the block.

However, in use, the block of natural or artificial stone to be cut can have various dimensions; that is, when using guide rollers with a fixed position, the diamond wires themselves are not well guided upstream and/or downstream of the stone block being cut.

The prior art document ES 2 652 516 A2 shows a multi-wire machine for cutting blocks of natural or artificial stone, equipped with a tensioning device for the diamond wire loops divided into a first tensioning means for large displacements, i.e., capable of tensioning the diamond wire loops during assembly-maintenance, and a second tensioning means, individual for each wire, for the fine tensioning of each closed-loop diamond wire.

Furthermore, it is known in the art from document TR 201210695 U a device for adjusting the guide rollers towards the stone block being cut, both upstream and downstream of the block, so as to keep the diamond wires well guided at the entrance and exit of the cutting grooves in the block, and to allow the cutting of stone blocks of various dimensions, even small ones compared to the maximum width of the blocks that can be cut, but with a guidance of the diamond wires provided by the guide rollers close to the block itself being cut. This guide roller adjustment device allows said rollers to slide almost horizontally in a linear approach/retraction with respect to the side of the block being cut each time a stone block to be cut into slabs is replaced.

Furthermore, it is known in the art from document WO 2015/125122 A2 the implementation of means for moving the guide rollers in a linear direction towards the stone block being worked, both upstream and downstream of the diamond wires' cutting path in the block. The motion is linear and inclined downwards when approaching the block being cut. This mechanism is motorized and provides for rack and pinion mechanical means to maneuver the commanded guide roller in advancement/retraction and to maintain a constant tangency angle of the wires themselves with respect to the guide roller.

However, although the preceding document insists on the motorization of the linear movement of the guide roller, it is also known in the art from document DE 19722123 A1 a motorized advancement/retraction drive in a horizontal direction for guiding the cutting wire of a diamond wire saw for stone materials.

Therefore, in creating a new constructive solution for controlling and actuating the displacement of a guide roller from or towards a stone block being cut, it is not always necessary or mandatory to perform the advancement in a linear direction, as this advancement/retraction, in addition to depending on the direction of the wires that are in tangential contact with the guide roller, said wires have an inclination, possibly to be controlled or corrected, at the moment of entry into the cutting slit in the groove generated by the cutting in the stone block at work. This is all the more true when using a multitude of small-diameter diamond wires, as is now customary in modern multi-wire saws for cutting, to increase the number of slabs and at the same time reduce the waste generated in the cutting and the costs of the cutting itself. That is, essentially to improve the profitability of cutting a stone block into thin slabs.

Furthermore, in use, the stone blocks being cut do not always have perfectly planar entry and exit walls for the diamond wires in the cut, but often natural stone blocks have irregularities and deviations of the wall that require the guide rollers to be adjusted in a mobile manner by approaching or moving away from the beginning to the end of the cutting of a stone block during the cut.

Finally, in the prior art with the known advancement/retraction of the guide rollers, they generate vibrations due to construction imperfections that have repercussions with unbalances of the rotating mass of the single guide roller on the cantilevered mechanical support parts of said guide rollers; moreover, even the vibrations of the single cutting diamond wire itself that penetrates the cutting groove in the stone block cause vibrations that add to the vibrations of the said construction. Therefore, this limitation of the prior art generates over time machine downtime of the multi-wire cutting machine as a whole, such as to reduce the useful working times between one maintenance and the next.

This state of the art is susceptible to further and very advantageous improvements with regard to the possibility of realizing a multi-wire cutting machine for cutting blocks of stone material with an improved wire guide device, which overcomes the aforementioned drawbacks and simultaneously realizes a more rigid, functional, and versatile guide mechanism for the guide rollers, and at the same time allows for the use of small-diameter diamond wires.

The technical problem, therefore, at the basis of the present invention is to create a multi-wire cutting machine for cutting blocks of stone material with an improved wire guide device, improving the prior art, i.e., allowing the creation of a new mechanism for positioning and moving the guide rollers, allowing their adaptation to the multiple cutting conditions that occur during the cutting of an irregular stone block.

A purpose inherent in the preceding technical problem is to create the sought-after mechanism for supporting and guiding the guide rollers, which is at the same time robust and rapidly maneuverable.

Furthermore, another aspect of the technical problem addressed, in creating the new support and guide mechanism for a guide roller, is connected with the management of the position of the guide roller in moving away from or approaching the block being cut itself, achieving large displacements and avoiding the transmission of unbalances and vibrations in the rotation of the guide roller itself to the multitude of diamond wires in the cut.

Moreover, a guide roller needs to maintain the rack-like protection associated with it active and correctly positioned; that is, a further and not least aspect of the technical problem addressed remains evident from the management of the rack associated with the guide roller which, it is known, has different conformations and different purposes if associated with the guide roller upstream of the stone block being cut or downstream of the same block in the cutting path.

### Summary of the Invention

This problem is solved, according to the present invention, by a multi-wire cutting machine for cutting blocks of stone material with an improved wire guide device, comprising a support and guide structure for cutting a block of stone with a multitude of diamond wires; the diamond wires are guided upstream and downstream of the stone block by guide rollers and each of said guide rollers is equipped with a respective mechanism for approaching or moving away from the wall of the stone block being worked. The multi-wire cutting machine of the invention also comprises a tensioning device for the diamond wires comprising first tensioning means and second tensioning means, said first and second tensioning means being made to oscillate on respective oscillation pins connected to the support and guide structure, and is characterized in that each mechanism for approaching or moving away the guide rollers comprises an oscillating frame placed in oscillation on a pair of oscillation hinges with an axis oriented like the rotation axis of the guide roller and connected to the support and guide structure of the multitude of diamond wires. The multi-wire cutting machine of the invention also comprises an adjusting device for the oscillating frame that allows modifying the conformation of each approaching or moving away mechanism to determine the position of the axis of the respective guide roller in approaching or moving away from the stone block being cut.

In an improved embodiment, each adjusting device of the corresponding guide roller is controlled independently of the other adjusting device for controlling the position of the guide roller towards the opposite wall of the stone block being cut.

Furthermore, in a further variant of the embodiment, the command for adjusting the position of the guide roller, both upstream and downstream of the stone block in the cut, is carried out continuously even during the cut.

Furthermore, in a preferred embodiment, the pair of oscillation hinges comprises a front hinge and a rear hinge connected to the structure of the multi-wire cutting machine, which is made mobile in a vertical direction for guiding the diamond wires in the cutting of the stone block.

Furthermore, in a variant of the preceding embodiments, in which an oscillating frame is connected in oscillation to the pair of oscillation hinges supported by an upper beam of the multi-wire cutting machine.

Furthermore, in a specific variant, the adjusting device for the position of the oscillating frame and of the guide roller rotatably supported by it, is connected and oscillating on the oscillating frame itself by means of a cross-member supported by the oscillating frame with pins.

Furthermore, in a preferred embodiment, the adjusting device comprises at least two linear actuators that are commanded in unison, maintaining the alignment of the guide roller supported by each oscillating frame, with respect to the mobile structure of the multi-wire cutting machine in the vertical direction.

Furthermore, in a variant of the preceding embodiments, the linear actuators comprise a maneuvering screw and a lead screw for actuating the ends of the actuator; each actuator is equipped with an angular transmission of the rotational motion from a drive shaft and a drive and control motor of the adjusting device.

Furthermore, in a specific embodiment, in association with an oscillation hinge of the pair of oscillation hinges, front and rear, a fulcrum is present, connected in oscillation with a control rod, in turn connected with an oscillation control lever and oscillating on the axis of a guide roller, for positioning the oscillation of a rack with controlled inclination and/or for positioning the oscillation of a protection with controlled inclination.

Finally, in a variant embodiment, in connection with the preceding embodiment, the oscillation fulcrum of the control rod is associated with the rear oscillation hinge of the oscillating frame.

Further characteristics and advantages of the present invention, in the realization of a multi-wire cutting machine for cutting blocks of stone material with an improved wire guide device, will become apparent from the following description of an embodiment and realization given by way of indicative and non-limiting example with reference to the nine attached drawing sheets.

### Brief Description of the Drawings

- Figure 1 represents a schematic front view of a cutting machine for stone blocks with a multitude of diamond wires equipped with the guide rollers according to the present invention, here shown with a stone block being cut of maximum dimension;
- Figure 1a represents a schematic front view of a cutting machine for stone blocks with a multitude of diamond wires equipped with the guide rollers according to the present invention, here shown without the outer casing, to better highlight its mechanical components;
- Figure 1b represents a constructive detail of the tensioning device for the diamond wires of a cutting machine for stone blocks with a multitude of diamond wires equipped with the guide rollers according to the present invention;
- Figure 2 represents an enlarged schematic perspective view of a support and guide mechanism for a guide roller, here the guide roller is represented on the exit side of the wires from the block;
- Figure 3 represents an enlarged schematic perspective view, reference III, of the oscillation mechanism of the guide roller of Figure 2;
- Figure 4 represents an enlarged schematic perspective view, reference IV, of the oscillation mechanism of the guide roller of Figure 2;
- Figure 5 represents a schematic front view of a cutting machine for stone blocks, like Figure 1, with a small block being cut and the guide rollers in a position moved away from the block;
- Figure 6 represents a schematic front view of a cutting machine for stone blocks, like Figure 5, with the guide rollers in a position approached to a small block being cut;
- Figure 7 represents a schematic front view of a cutting machine for stone blocks, like Figure 6, with the guide rollers in a position approached to the small block being cut that has at least one irregular side wall facing a guide roller;

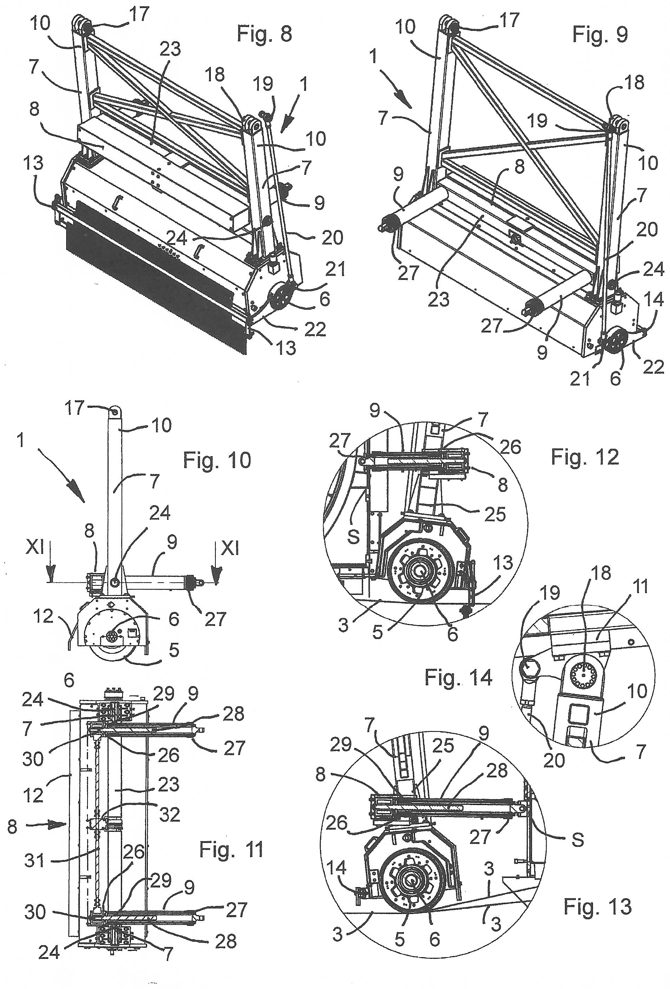

- Figure 8 represents a schematic perspective view from the rear side of the support and guide mechanism of the guide roller at the exit from the stone block being cut;
- Figure 9 represents a schematic perspective view from the rear side of the support and guide mechanism of the guide roller upstream in the cutting direction of the stone block being cut;
- Figure 10 represents a schematic view along the axis of the guide roller of the support and guide mechanism of said guide roller;
- Figure 11 represents a schematic section XI-XI of the support and guide mechanism of the guide roller of Figure 10;
- Figure 12 represents a schematic section of the support and guide mechanism of the guide roller made on the actuator device of the oscillation of the guide roller on the downstream side of the block;
- Figure 13 represents a schematic section of the support and guide mechanism of the guide roller made on the actuator device of the oscillation of the guide roller on the upstream side of the block;
- Figure 14 represents an enlarged schematic view of the support and guide mechanism of the guide roller made in the articulation of the oscillation of a guide roller and of the adjustment of the inclination of the rack associated with the guide roller;

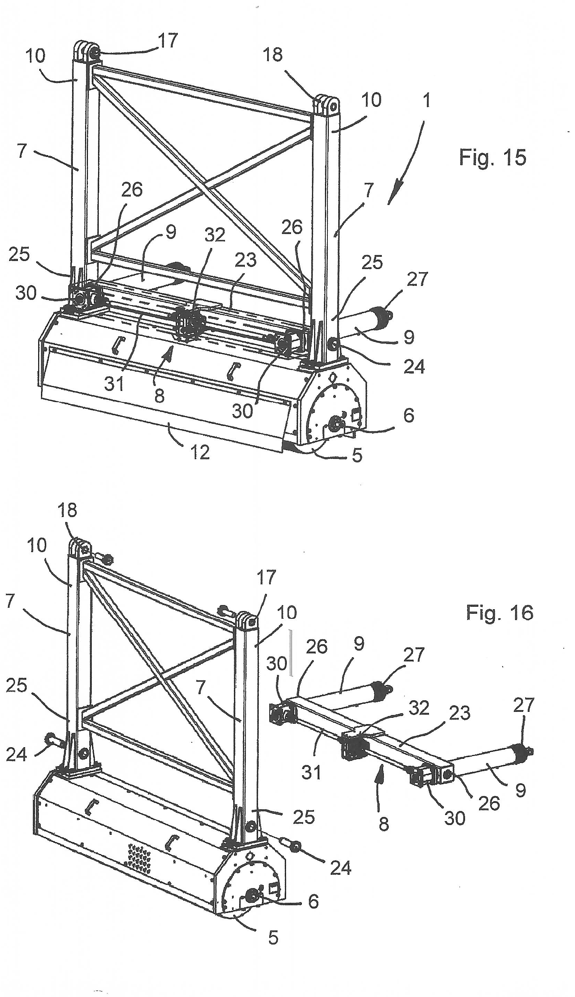

- Figure 15 represents a schematic perspective view from the front side of the maneuvering, support and guide mechanism of a guide roller;
- Figure 16 represents an exploded schematic perspective view of the maneuvering mechanism of a guide roller, with separate support and guide;

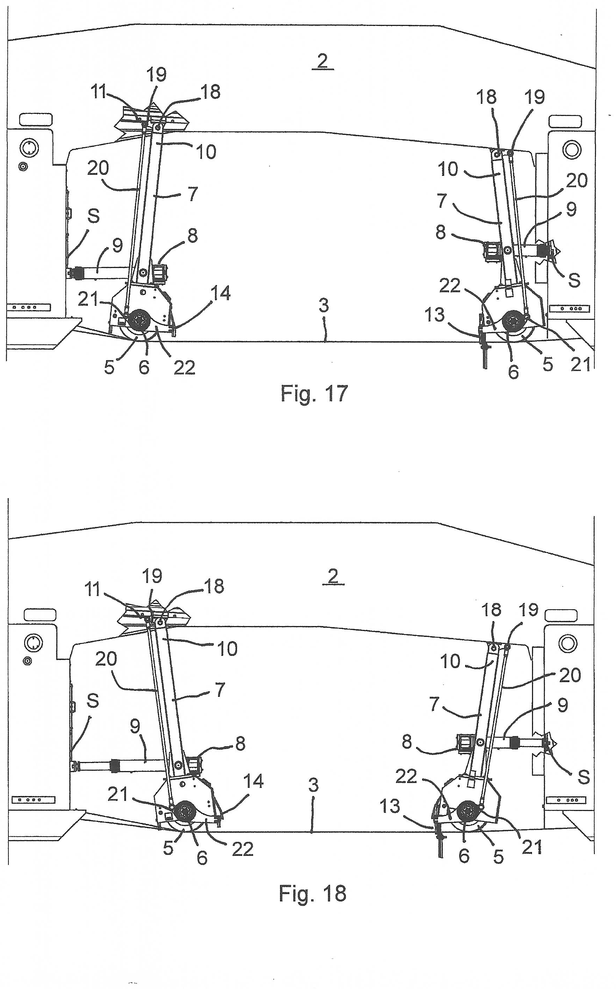

- Figures 17 and 18 represent a schematic rear view of the oscillation mechanisms for support and guide and for controlling the position of the rack associated with the single guide roller;
- Figures 19, 19a, and 19b represent a schematic front and rear view of the oscillation mechanism of the support and guide and control of the position of the rack associated with the guide roller downstream of the block being cut, in the retracted position of Figure 19; -
- Figures 20, 20a, and 20b represent a schematic front and rear view of the oscillation mechanism of the support and guide and control of the position of the protection associated with the guide roller upstream of the block being cut, in the retracted position of Figure 20;
- Figures 21, 21a, and 21b represent a schematic front and rear view of the oscillation mechanism of the support and guide and control of the position of the rack associated with the guide roller downstream of the block being cut, in the maximum advancement position of Figure 21;
- Figures 22, 22a, and 22b represent a schematic front and rear view of the oscillation mechanism of the support and guide and control of the position of the protection associated with the guide roller upstream of the block being cut, in the maximum advancement position of Figure 22.

### Detailed Description of a Preferred Embodiment

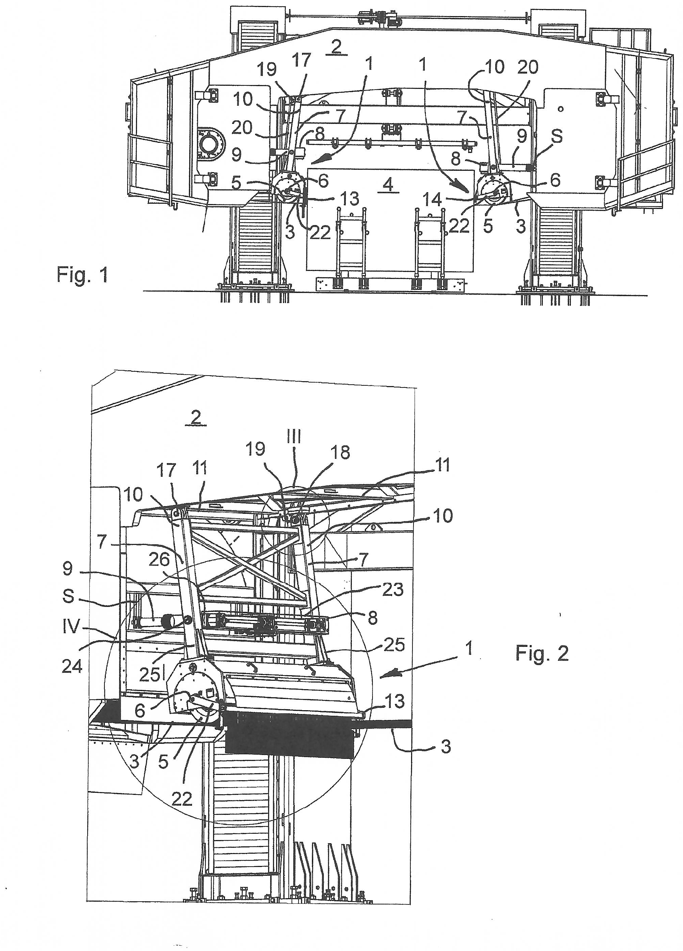

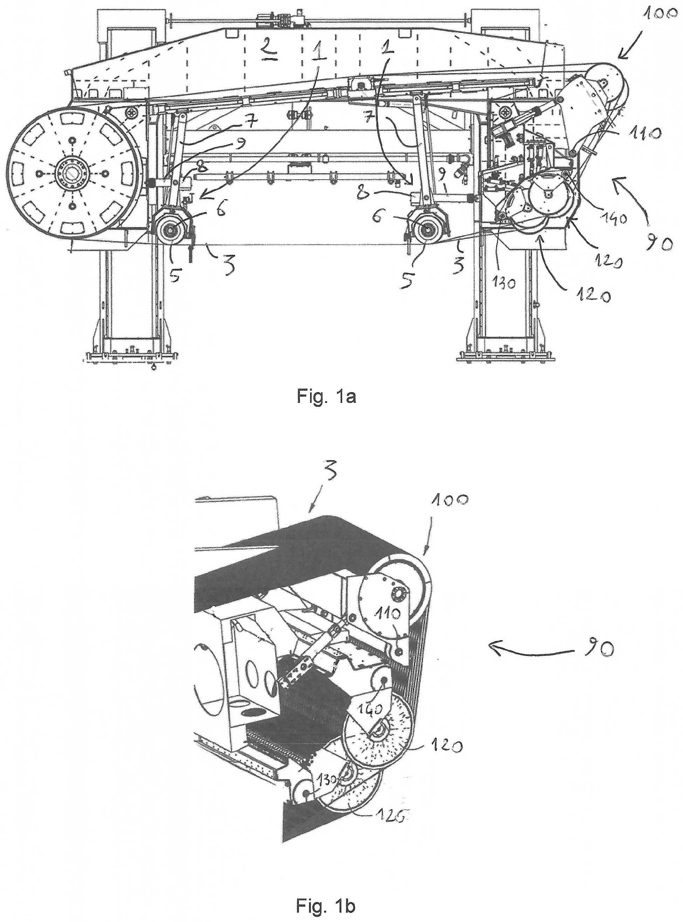

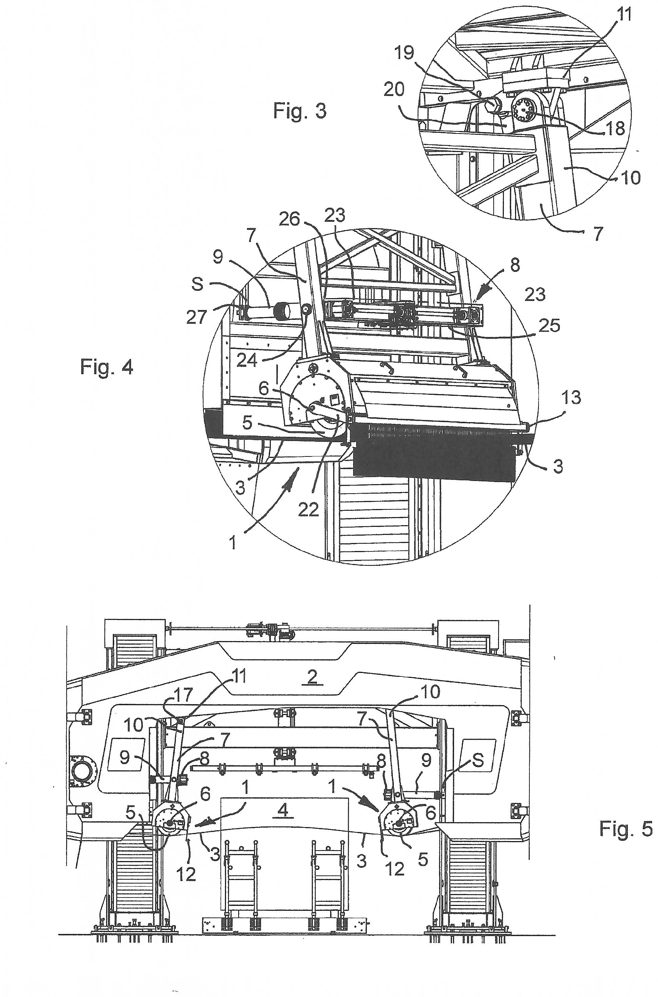

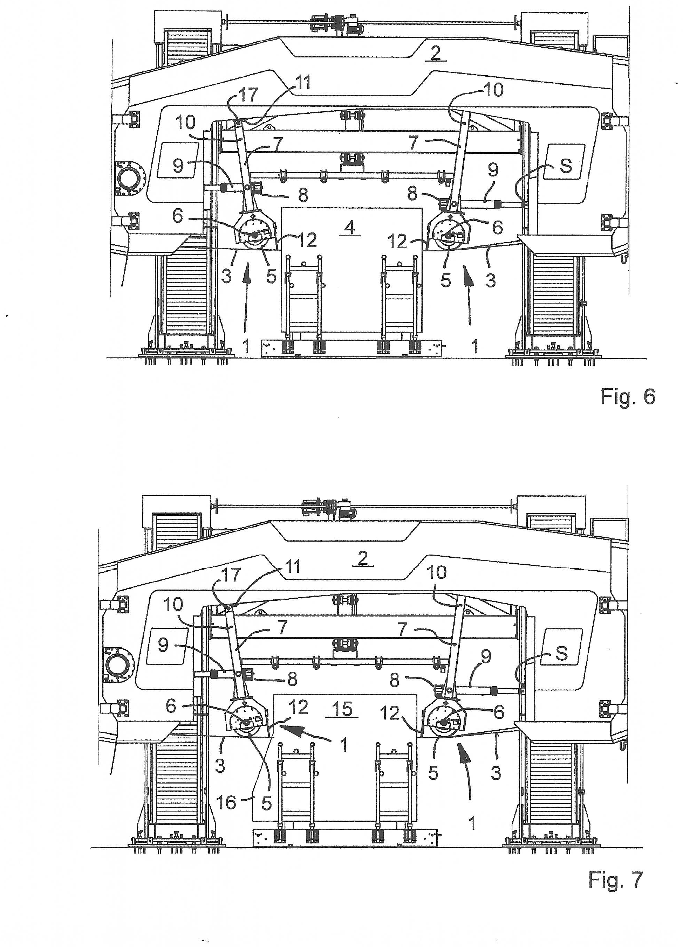

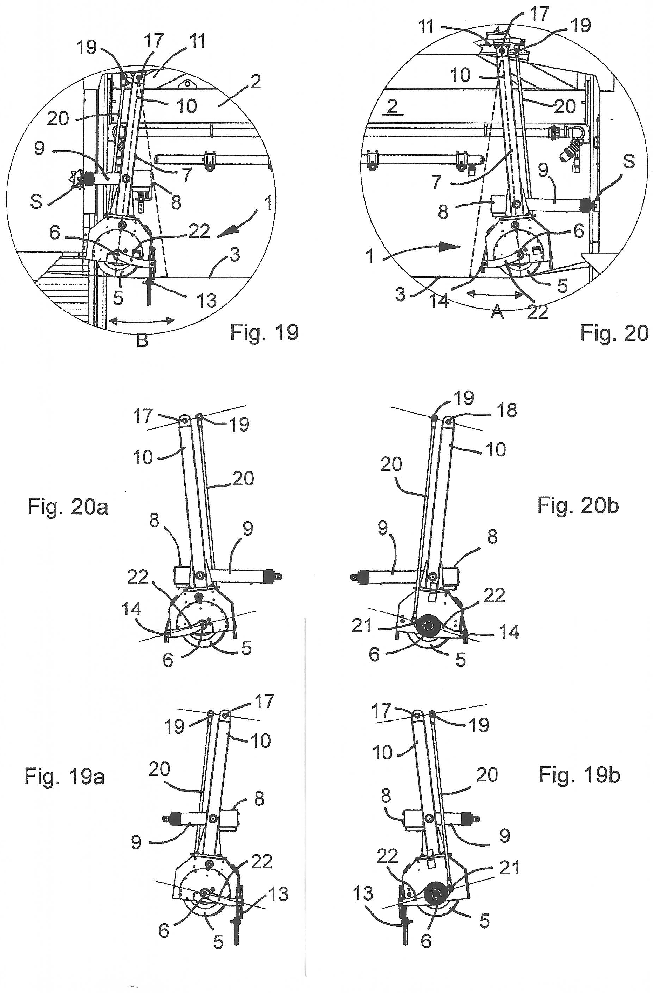

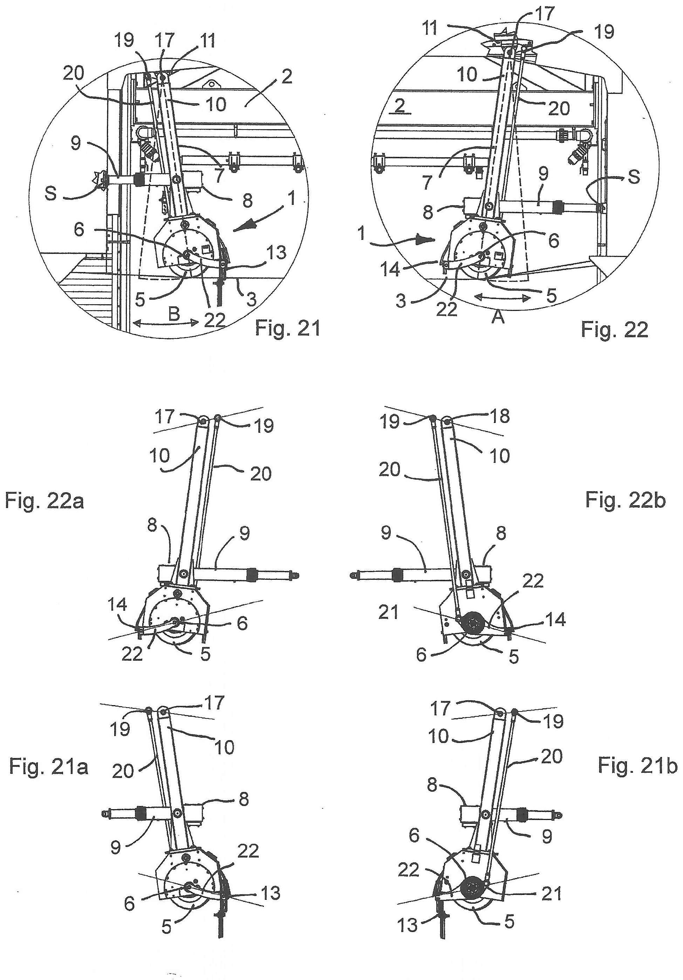

In Figures 1 to 7, an embodiment of the improved wire guide device 1 is schematically represented, mounted on a multi-wire cutting machine 2 with closed-loop diamond wires 3 for cutting stone blocks 4, in which a guide roller 5 is supported in an oscillating manner in the path of the diamond wires 3, one upstream and one downstream of the stone block being cut; the wire guide devices 1 comprise: a guide roller 5 of a known type supported for rotation on an axis 6 which is placed in oscillation by means of an oscillating frame 7; an adjusting device 8 for the position of said oscillating frame, consisting of linear actuators 9 connected to the oscillating frame and to the structure S of the multi-wire cutting machine 2; each oscillating frame 7 is connected in oscillation at the upper end 10 to an upper beam 11 of the multi-wire cutting machine 2; each guide roller 5 is associated with the known fixed rack or protection 12, which are fixed to the structure of the casing of the guide roller 5, or alternatively to a rack with controlled inclination 13, on the guide roller downstream of the block being cut, or a protection with controlled inclination 14, on the guide roller upstream of the block to be cut. Furthermore, in Figure 7, an irregular block 15 of stone with an irregular wall 16 is shown. As illustrated in Figure 1a and Figure 1b, the multi-wire cutting machine 2 with closed-loop diamond wires 3 for cutting stone blocks 4 also comprises a tensioning device 90 for the diamond wires 3; said tensioning device 90 is known per se and illustrated, for example, in patent publication ES 2 652 516 A2. This tensioning device 90 comprises first tensioning means and second tensioning means. The first tensioning means comprise a roller or drum 100 oscillating on a horizontal pin 110 connected to the structure of the multi-wire cutting machine that provides for the large displacement movement in tensioning all the diamond wire loops, which is useful in assembly and maintenance operations. The second tensioning means of the tensioning device 90 are placed below the drum 100 and comprise single pulleys 120 supported in oscillation on horizontal pins 130, 140 connected to the structure of the multi-wire cutting machine, for the fine tensioning of each closed-loop diamond wire. The oscillating frames 7 are supported in oscillation with front hinges 17 to the upper beam 11 of the multi-wire cutting machine 2; said frame is associated with rear oscillation hinges 18, placed on the same oscillation axis as the hinges 17; associated with the rear hinge is a fulcrum 19 of a control rod 20 for the inclination of the controlled rack 13 or for the controlled protection 14; said control rod is connected to an oscillation control lever 21: this lever has an oscillation aligned with the rotation axis 6 of the guide roller 5; in fact, both the rack with controlled inclination 13 and the protection with controlled inclination 14 are connected, each to its own oscillation control lever 21, only on the rear side, which is combined with an oscillation arm 22, and in which the arm is present on both sides of the guide roller 5, to achieve the correct oscillating suspension of both the controlled rack 13 and the controlled protection 14. The adjusting device 8 for the oscillation of the wire guide device 1 is connected and made to oscillate in turn on the oscillating frame 7, to support the guide roller 5 in the desired position for guiding the diamond wires in the specific cutting of a stone block. The oscillation of the adjusting device 8 occurs with a cross-member 23 supported by pins 24 connected in oscillation to the lower end 25 of the oscillating frame 7; the oscillation of the cross-member 23 and of the adjusting device is minimal and proportional to the position of the wire guide device 1. Two linear actuators 9 are connected to the cross-member and oscillate with said cross-member from a drive end 26, while the opposite end 27 of each actuator 9 is connected and pivoted to the structure S of the multi-wire cutting machine. The linear actuators 9 are, advantageously, of the maneuvering screw 28 and lead screw 29 type to command the extension or retraction of said actuator 9; a synchronous command of the actuators connected on a cross-member 23 is realized by means of an angular transmission 30 connected to a drive shaft 31 and in union with a drive and control motor 32 of the linear actuators 9. Finally, in Figures 20 and 22, the positions reached, in retraction and extension, are visible with the oscillation angle A for the wire guide device 1 on the upstream side of the stone block being cut; while with the oscillation angle B, the oscillation angle for the wire guide device 1 on the downstream side of the stone block being cut is indicated, from Figures 19 and 21. Furthermore, in the Figures of the inclination position only of said wire guide devices 1, Figures 20a and 20b, Figures 22a and 22b, from the upstream side of the block being cut, show the effect of the oscillation control of the protection with controlled inclination 14; similarly, in Figures 19a and 19b, Figures 21a and 21b, show the effect of the oscillation control of the rack with controlled inclination 13, from the downstream side of the block being cut. Therefore, the alignment of the position of the rack with controlled inclination 13 and the alignment of the position of the protection with controlled inclination 14 remains constant with the average direction of tangency of the diamond wires 3 on the guide rollers 5 even though said rollers are in the approached oscillation position, Figures 21, 21a, 21b, and also 22, 22a, 22b, or distanced from the stone block being cut, Figures 19, 19a, 19b, and also 20, 20a, 20b.

The use of the multi-wire cutting machine for cutting blocks of stone material with the improved wire guide device 1 according to the invention normally occurs in analogy with the use of a multi-wire cutting machine of a known type with cantilevered guide rollers from each side column of the frame itself. However, the positioning of the guide roller 5 at the lower end of the oscillating frame 7 allows the guide roller a more rigid and rapid guidance of the roller in approaching or moving away from the wall of the stone block 4 being cut. In fact, as visible in Figure 7, even when cutting an irregular block 15 with an irregular wall 16, or both walls, the maneuver of approaching and moving away one, or both, guide rollers 5 is very rapid and also precise with the actuation of the adjusting device 8 and the linear actuators 9. The very advantageous constitution of said linear actuators with a maneuvering screw 28 and lead screw for the push/pull of the opposite end 27 of the linear actuator allows for easy positioning of the guide roller 5 supported in the oscillating frame 7. It is known that the guide rollers 5 are used with a diameter of about 500 mm and have a length of 2 meters; the mechanical construction, although complex, prevents the improvement of an inevitable but slight lack of balance. During its rotation, due to this lack, vibrations are generated that can influence the stability and efficiency of the guidance of the diamond wires at the entrance and exit of the cut in the block. Thus, the specific structure described for the oscillating support of the guide rollers 5 creates a particularly rigid structure that minimizes the effects of the vibrations of the rotation of the guide rollers, which are known to rotate at the high cutting speed applied by the diamond wires so guided, ensuring a reliability superior to what is achieved in the prior art. Finally, to complete the response to the technical problem set forth above, even the vibrations that are generated in the cutting diamond wires 3 during the cut, even if transmitted to the rotating guide roller 5, both upstream before entering the cut and downstream, i.e., after exiting the cut in the stone block 4, are validly contained and supported, limiting their overall effect on the guidance of the other diamond wires by the specific structure described for the support and guidance of the guide rollers 5 in the multi-wire cutting machine 2 equipped with wire guide devices 1. The advantages in the use of a multi-wire cutting machine for cutting blocks of stone material with an improved wire guide device 1 as described, can be summarized as follows. The mechanical suspension of the guide rollers with the wire guide devices 1 is distinguished from the prior art by the conformation that places the guide roller 5 in a suspended, connected, and oscillating position, by means of two robust arms to the upper structure of the multi-wire cutting machine 2 at the upper beam 11. This configuration gives the system a positional rigidity of the guide roller 5 which translates into an effective guiding effect for the diamond wires 3. Contrary to what has been stated above, in the configuration known in the art, the roller is supported by two small columns that emerge from the side housings and act as a cantilever. This characteristic makes the structure more elastic and less stable. During the high-speed rotation of the guide rollers, the elasticity of the cantilever increases the transmission of vibrations, worsening the cutting precision of the diamond wires 3 and the lifespan of the wires themselves and of the cantilevered guide structure of the guide rollers. Another advantage lies in the ability to manage the vibrations caused not only by the rotation of the roller, but also by the cutting motion of the wire. When the wire comes into contact with the block, any irregularities are transferred to the wire guide roller. The rigid support, described in the present invention, is able to absorb and reduce these vibrations in a very efficient manner compared to the cantilever system. Obviously, to a multi-wire cutting machine for cutting blocks of stone material with an improved wire guide device 1, as described above, a person skilled in the art, in order to satisfy specific and contingent needs, may make numerous modifications, all of which are however contained within the scope of protection of the present invention as defined by the following claims. In fact, although less convenient, the oscillation position of the oscillating frames 7 may not be vertical, but with non-rectilinear oscillating frames, i.e., with the oscillating frame connected with the oscillation hinge to the structure S of the multi-wire cutting machine. Another variant with the oscillating frame 7, both vertical and non-rectilinear, the adjusting device 8 acts with linear actuators 9 in an oblique direction with respect to the vertical direction; or, in a further configuration, the adjusting device acts with the opposite end 27 of the linear actuator 9 connected to the upper beam 11. Furthermore, in the adjusting device 8, it can be provided, although less conveniently, only one linear actuator for controlling the advancement/retraction position of the oscillating frame; or, in substitution of the described linear actuators, pneumatic or hydraulic actuators can be provided with precise control of the extension; finally, a possible variant also remains the adoption of mechanical linear actuators with wheel and rack drive.

## Claims

1. A multi-wire cutting machine for cutting blocks of stone material with an improved wire guide device, comprising a support and guide structure for cutting a stone block (4) with a multitude of diamond wires (3); the diamond wires being guided upstream and downstream of the stone block by guide rollers (5); each of said guide rollers (5) being equipped with a respective mechanism for approaching or moving away from the wall of the stone block being worked; a tensioning device (90) for the diamond wires (3) comprising first tensioning means (100) and second tensioning means (120), said first (100) and second (120) tensioning means being made to oscillate on respective oscillation pins (110, 130, 140) connected to the support and guide structure, **characterized in that** each mechanism for approaching or moving away the guide rollers (5) comprises an oscillating frame placed in oscillation on a pair of oscillation hinges with an axis oriented like the axis of rotation of the guide roller (5) and connected to the support and guide structure of the multitude of diamond wires; an adjusting device for the oscillating frame which allows modifying the conformation of each mechanism for approaching or moving away to determine the position of the axis (6) of the respective guide roller when approaching or moving away from the stone block being cut.

2. The multi-wire cutting machine, according to claim 1, wherein each adjusting device (8) of the corresponding guide roller (5) is commanded independently of the other adjusting device (8) for controlling the position of the guide roller towards the opposite wall of the stone block being cut.

3. The multi-wire cutting machine, according to claim 2, wherein the command for adjusting the position of the guide roller (5), both upstream and downstream of the stone block in the cut, is carried out continuously even during the cut.

4. The multi-wire cutting machine, according to claim 1, 2 or 3, wherein the pair of oscillation hinges comprises a front hinge (17) and a rear hinge (18) connected with the structure of the multi-wire cutting machine (2) which is made movable in a vertical direction for the guidance of the diamond wires (3) in the cutting of the stone block.

5. The multi-wire cutting machine, according to the preceding claim 4, wherein an oscillating frame (7) is connected in oscillation to the pair of oscillation hinges supported on an upper beam (11) of the multi-wire cutting machine.

6. The multi-wire cutting machine, according to one of the preceding claims 4 or 5, wherein the adjusting device (8), for the position of the oscillating frame and of the guide roller (5) rotatably supported by it, is connected and oscillating on the oscillating frame itself by means of a cross-member (23) supported on the oscillating frame with pins (24).

7. The multi-wire cutting machine, according to one of the preceding claims, wherein the adjusting device (8) comprises at least two linear actuators (9) which are commanded in unison, maintaining the alignment of the guide roller (5) supported on each oscillating frame, with respect to the movable structure of the multi-wire cutting machine (2) in the vertical direction.

8. The multi-wire cutting machine, according to the preceding claim 7, wherein the linear actuators (9) comprise a maneuvering screw (28) and a lead screw (29) for actuating the ends of the actuator; each actuator is equipped with an angular transmission (30) of the rotational motion from a drive shaft (31) and a drive and control motor (32) of the adjusting device (8).

9. The multi-wire cutting machine, according to the preceding claim 5, wherein in association with an oscillation hinge of the pair of oscillation hinges, front and rear, there is a fulcrum (19) connected in oscillation with a control rod (20), in turn connected with an oscillation control lever (21) and oscillating on the axis (6) of a guide roller (5), for positioning the oscillation of a rack with controlled inclination (13) and/or for positioning the oscillation of a protection with controlled inclination (14).

10. The multi-wire cutting machine, according to the preceding claim 9, wherein the fulcrum (19) of oscillation of the control rod (20) is associated with the rear oscillation hinge (18) of the oscillating frame (7).
